# EUROPÄISCHE PATENTANMELDUNG

(11) **EP 0 527 457 A1**
(43) Veröffentlichungstag der Anmeldung: **17.02.1993**
(21) Anmeldenummer: 92113551.3
(22) Anmeldetag: 08.08.1992
(51) Int. Cl.: B01D 53/34, B01D 53/36, C22B 43/00

(54) **Verfahren zum Abscheiden von Quecksilber aus Rauchgas**

(30) Priorität: 14.08.1991 DE 4126839; 25.07.1992 DE 4224676
(71) Anmelder: VEBA KRAFTWERKE RUHR AKTIENGESELLSCHAFT, D-45801 Gelsenkirchen (DE)
(72) Erfinder: Gutberlet, Heinz, Dr. Dipl.-Chem., W-4281 Raesfeld (DE)
(74) Vertreter: Cohausz & Florack Patentanwälte

(57) **Zusammenfassung**

Die Erfindung betrifft ein Verfahren zum Entfernen von Quecksilber aus Rauchgasen von Kohlekraftwerken sowie Müll- oder Klärschlamm-Verbrennungsanlagen, bei denen die Rauchgase vor der Naßwäsche mit einer Temperatur unter 500 ^{o}C mit einem Oxidations-Katalysator in Kontakt gebracht werden, wobei der metallene Quecksilberanteil oxidiert wird, worauf das ionische Quecksilber im Waschwasser gelöst und danach durch Fällen oder Adsorption aus dem Waschwasser abgeschieden wird.

## Beschreibung

Die Erfindung betrifft ein Verfahren zum Abscheiden von Quecksilber aus Rauchgasen, wie sie in Feuerungen von Kohlekraftwerken sowie Müll- und Klärschlammverbrennungsanlagen anfallen.

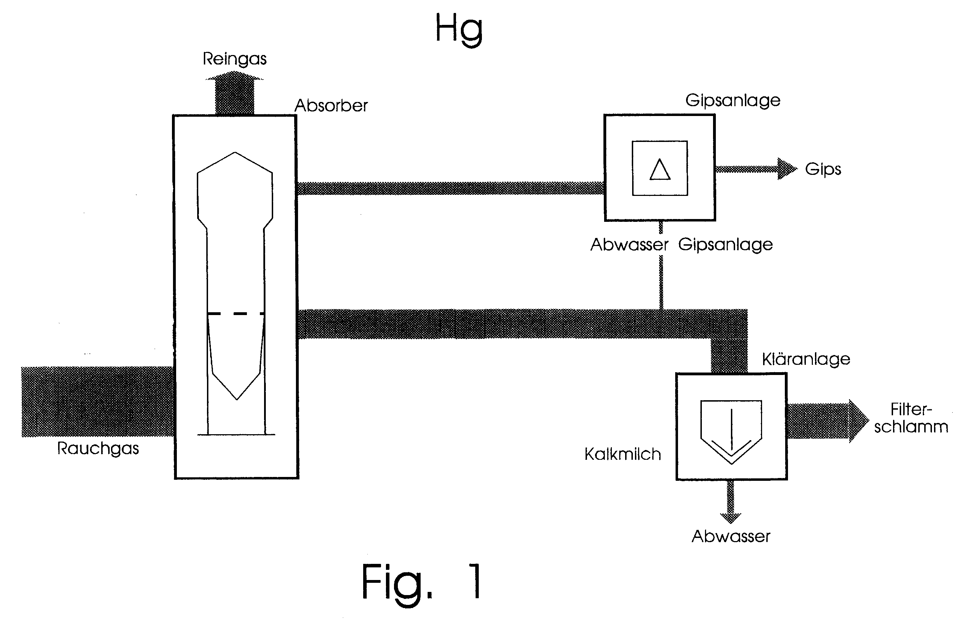

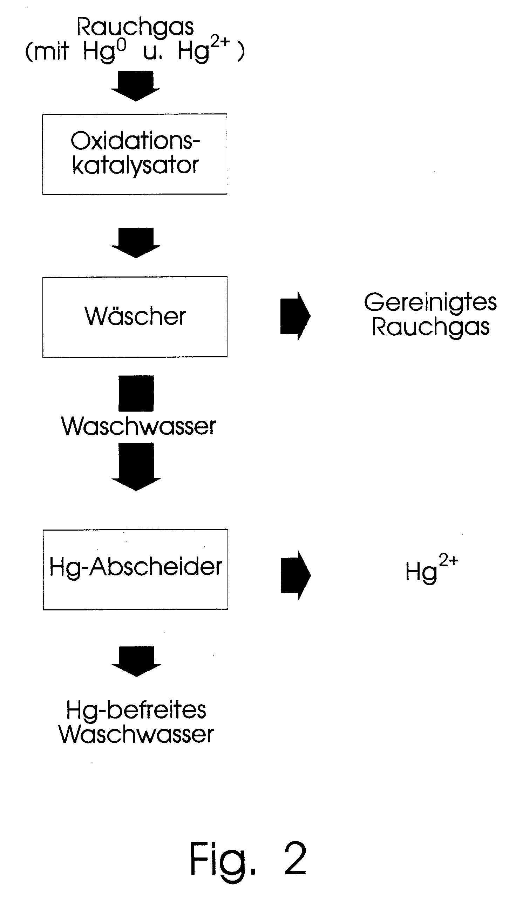

In solchen Rauchgasen sind Schwermetalle, darunter Quecksilber, in Spuren enthalten. Diese gelangen zum Teil mit dem Abgas ins Freie, zum Teil lagern sie sich in den Stoffströmen an, die bei der Reinigung der Rauchgase als Reststoffe anfallen. Bei der Verbrennung von Kohle, Müll oder Klärschlamm wird Quecksilber praktisch vollständig in die Gasphase überführt. Am Kesselende im Temperaturbereich von 350 bis 400 ^{o}C liegt das Konzentrationsniveau zwischen 15 und 60 µg/m³. In Fig. 1 ist ein typisches Stoffflußschema für Quecksilber dargestellt, wie es an Rauchgasen von Kohlekraftwerken ermittelt wurde, Quelle: Forschungsbericht ENV-492-D (B) der EGKS "Messung der Schwermetallabscheidung einer Rauchgasentschwefelungsanlage nach dem Kalkwaschverfahren" von H. Gutberlet, April 1984, S. 51. Danach werden nur etwa 20 % des im Rauchgas enthaltenen Quecksilbers aus dem Rauchgas abgeschieden. Der überwiegende Teil gelangt in den Klärschlamm, und ein geringer Teil wird in den Gips eingebunden. 80 % gelangen aber mit dem Abgas ins Freie.

Die Entfernung von Hg aus Abgasen ist aus Umweltschutzgründen wünschenswert, wird aber bisher nicht gezielt betrieben.

Aus der EP-0 064 962 B1 ist ein Verfahren zum Abtrennen von dampfförmigem elementaren Quecksilber und gasförmigen Quecksilberhalogeniden aus Gas bekannt, bei dem man das Gas aus einer wässrigen Waschflüssigkeit behandelt. Durch Zusatz von Ionen, die mit Hg (II)-Ionen Komplexe bilden können, wird das elementare Quecksilber oxidiert und in der Waschflüssigkeit absorbiert. Bei diesem bekannten Verfahren erfolgt das Abtrennen des Quecksilbers also durch Waschen.

Ein gleichartiges Verfahren wird dort auch zum Abtrennen von Quecksilber aus Rauchgasen einer Müllverbrennungsanlge in Form von Sulfid durch eine Naßwäsche angewendet, H. Vogg: Von der Schadstoffquelle zur Schadstoffsenke - Neue Konzepte der Müllverbrennung, in: Chem.-Ing.-Techn. 60 (1988) Nr. 4, S. 247 bis 255.

In der DE 37 01 764 A1 wird das Abtrennen von Quecksilber aus Gasen mit Hilfe von Kupfer-II-Chlorid in einer schwefelsauren Waschlösung bei einer Temperatur von 20 bis 100 ^{o}C empfohlen. Der sich bildende lösliche Quecksilberchloro-Komplex wird aus der sauren Lösung abgetrennt.

Zur Entfernung von Quecksilber aus Gasen oder Gasgemischen wird in der DE-39 31 891 A1 ein Verfahren bekannt gegeben, bei dem mittels Ozon eine Oxidation des Quecksilbers durch reine Katalyse erreicht wird. Dem Gasgemisch wird eine 5- bis 50-fache stöchiometrische Menge Ozon dem Quecksilbergehalt entsprechend zudosiert.

Die Reaktion läuft an einem Metall/Metall- und/oder Metall/ Metalloxid und/oder Metalloxid/Metalloxid-Katalysator ab. Das entstandene Quecksilberoxid wird durch bekannte Filtrationsverfahren dann entfernt. Das Verfahren wird insbesondere zum Zweck der Entsorgung von Standard- Leuchtstofflampen angewendet. Hinweise auf die Abscheidung von Quecksilber aus Verbrennungsabgasen enthält diese Schrift nicht.

Der Erfindung liegt nun die Aufgabe zugrunde, ein unter technischen und wirtschaftlichen Gesichtspunkten geeignetes Verfahren zu schaffen, mit dem man Quecksilber aus Verbrennungsabgasen entfernen kann, und zwar im trocknen Zustand, d.h., bevor zum Entfernen der übrigen Schadstoffe eine Naßwäsche vorgenommen wird. Auf diese Weise soll verhindert werden, daß gasförmiges oder festes Quecksilber unkontrolliert und in zu großer Menge ins Freie gelangt.

Zur Lösung dieser Aufgabe wird gemäß der Erfindung vorgeschlagen, daß die Rauchgase vor der Naßwäsche mit einer Temperatur im Bereich von unter 500 ^{o}C mit einem Oxidations-Katalysator in Kontakt gebracht werden, worauf in einem mit Wasser betriebenen Wäscher oder Absorber die Quecksilberverbindungen durch Fällen oder Adsorption aus dem Waschwasser abgeschieden werden.

Im Gegensatz zu dem aus der DE 39 31 891 A1 bekannten Verfahren wird das erfindungsgemäße ohne Zusatz von Ozon durchgeführt. Die Oxidation erfolgt mit Hilfe der in den Verbrennungsabgasen enthaltenen Halogenide, insbesondere der Chloride, sowie des Restsauerstoffgehaltes. Bevorzugt erfolgt das Einleiten der Rauchgase in den Katalysator bei einer Temperatur im Bereich von 300 bis 400 ^{o}C. In diesem Temperaturbereich läuft die durch den Katalysator begünstigte Oxidation von Quecksilber am raschesten und vollkommensten ab.

Gemäß einer bevorzugten Ausgestaltung des erfindungsgemäßen Verfahrens wird als Oxidations-Katalysator ein Katalysator vom Metalloxid/Metalloxid-Typ verwendet, wie er auch in Denox-Anlagen zum Einsatz gelangt.

Die Erfindung beruht auf der im Zuge von entsprechenden Untersuchungen gewonnenen Erkenntnis, daß das Quecksilber im Rauchgas von Verbrennungsanlagen in Abhängigkeit vom Chloridgehalt zu mehr als 50 % aus metallenem Quecksilber besteht. Da der metallene Quecksilberanteil bei der Abscheidung durch eine Rauchgaswäsche Schwierigkeiten bereitet, wird er erfindungsgemäß in einem Oxidationskatalysator in ionisches Quecksilber überführt.

In dem Fließschema der Fig. 1 ist dies dargestellt. Nach Verlassen des Oxidations-Katalysators gelangt das Rauchgas in den Wäscher, in welchem es von Schwebstoffen und wasserlöslichen Substanzen befreit wird. Das gereinigte Rauchgas verläßt den Wäscher, während das Waschwasser mit darin suspendierten und gelösten Bestandteilen zunächst in einen Quecksilber-Abscheider geleitet wird. Darin wird das im Waschwasser gelöste Quecksilber durch Fällen oder Adsorption auf irgendeine geeignete Weise aus dem Waschwasser abgetrennt und einer Wiederverwendung zugeführt. Das von Quecksilber befreite Waschwasser gelangt dann zur weiteren Reinigung und Verarbeitung der Reststoffe, z.B. Gips, in weitere hier nicht dargestellte Anlagenteile.

Die Erfindung schafft somit ein neues Verfahren, mit dem es unter Verwendung handelsüblicher Anlagenteile auf einfache Weise möglich ist, Quecksilber aus Rauchgasen zu entfernen. Es wird damit ein weiterer Beitrag zum Emissionsschutz und zur Verringerung der Belastung der Umwelt durch schädliche Substanzen, hier das Schwermetall Quecksilber, geliefert.

## Patentansprüche

1. Verfahren zum Entfernen von Quecksilber aus Rauchgasen von Kohlekraftwerken sowie Müll- oder Klärschlamm-Verbrennungsanlagen,
**dadurch gekennzeichnet,** daß die Rauchgase vor der Naßwäsche mit einer Temperatur unter 500 ^{o}C mit einem Oxidations-Katalysator in Kontakt gebracht werden, wobei der metallene Quecksilberanteil oxidiert wird, worauf das ionische Quecksilber im Waschwasser gelöst und danach durch Fällen oder Adsorption aus dem Waschwasser abgeschieden wird.

2. Verfahren nach Anspruch 1,
**dadurch gekennzeichnet,** daß die Rauchgase mit einer Temperatur im Bereich von 300 bis 400 ^{o}C dem Katalysator zugeführt werden.

3. Verfahren nach Anspruch 1,
**dadurch gekennzeichnet,** daß als Oxidations-Katalysator einer vom Metalloxid/Metalloxid-Typ verwendet wird, wie er auch in Denox-Anlagen eingesetzt wird.
